(19) Europäisches Patentamt
European Patent Office
Office européen des brevets

(11) **EP 3 904 473 A1**

(12) **EUROPEAN PATENT APPLICATION**
published in accordance with Art. 153(4) EPC

(43) Date of publication:
**03.11.2021 Bulletin 2021/44**

(21) Application number: **19903532.0**

(22) Date of filing: **06.12.2019**

(51) Int Cl.:
*C09D 11/322* (2014.01)   *B41M 5/00* (2006.01)

(86) International application number:
**PCT/JP2019/047922**

(87) International publication number:
**WO 2020/137458 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2018 JP 2018243722**

(71) Applicant: **Kao Corporation**
**Chuo-ku,**
**Tokyo 103-8210 (JP)**

(72) Inventors:
• **EGAWA, Tsuyoshi**
 **Wakayama-shi, Wakayama 640-8580 (JP)**
• **AKAGI, Ryuichi**
 **Wakayama-shi, Wakayama 640-8580 (JP)**
• **KOZAKE, Katsuyuki**
 **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **WATER-BASED INK FOR INKJET PRINTING**

(57)   The present invention relates to [1] a water-based ink for ink-jet printing on a low-liquid absorbing printing medium, containing a pigment, a polymer dispersant, a water-soluble organic solvent and water, in which the water-soluble organic solvent contains an alkanediol having 3 to 4 carbon atoms and a glycol ether having a boiling point higher than a boiling point of the alkanediol; the glycol ether contains an alkyl group having 3 to 4 carbon atoms and a diethylene glycol or triethylene glycol group; and a mass ratio of [alkanediol/water-soluble organic solvent except for alkanediol] is not less than 1.4, and [2] an ink-jet printing method including the step of printing characters or images on a low-liquid absorbing printing medium using the aforementioned ink. The water-based ink for ink-jet printing according to the present invention is excellent in ejection properties as well as bending properties (follow-up properties) against deformation of the low-liquid absorbing printing medium.

**Description**

FIELD OF THE INVENTION

The present invention relates to a water-based ink for ink-jet printing, and an ink-jet printing method using the water-based ink.

BACKGROUND OF THE INVENTION

In ink-jet printing methods, droplets of ink are directly ejected from very fine nozzles and allowed to adhere to a printing medium to obtain a printed material on which characters or images are printed, etc. The ink-jet printing methods have become rapidly spread because of various advantages such as easiness of full coloration, low cost and non-contact with the printing medium. In recent years, in particular, from the viewpoint of improving weathering resistance and water resistance of the resulting printed material, the ink-jet printing methods using an ink containing a pigment as a colorant have become predominant.

Meanwhile, soft packaging has been extensively used for packaging foods, etc. In the soft packaging, names of goods to be packaged, etc., are indicated by printing on a thin flexible low-liquid absorbing printing medium formed of a synthetic resin, etc. The printing for the soft packaging has been conducted mainly by gravure printing. However, a gravure ink used in the gravure printing usually contains an organic solvent to disperse or dissolve a pigment or a resin therein, and therefore tends to pose problems concerning burden on working environments, etc.

In addition, as regards the printing for the soft packaging, studies have also been made on an ink-jet printing method using an active energy ray-curable ink. However, the active energy ray-curable ink has a fear concerning generation of a malodor therefrom. In particular, when using the active energy ray-curable ink in the printing for the soft packaging that has been often used for food packaging, the problem concerning generation of the malodor tends to exert a large adverse influence thereon.

For this reason, development of a water-based ink for ink-jet printing which has a less burden on working environments has now proceeded.

For example, JP 2015-28133A (Patent Literature 1) discloses an aqueous ink for ink-jet printing which contains water, a water-soluble organic solvent, resin particles and a pigment, as an aqueous ink that is excellent in drying properties, gloss and rub fastness, in which the water-soluble organic solvent contains three or more kinds of diol compounds such that a total content of the three or more kinds of diol compounds in the water-soluble organic solvent is not less than 45% by mass, and a difference in boiling point between at least three diol compounds among the aforementioned diol compounds is not less than 10°C.

SUMMARY OF THE INVENTION

The present invention relates to a water-based ink for ink-jet printing on a low-liquid absorbing printing medium, containing a pigment, a polymer dispersant, a water-soluble organic solvent and water, in which:

the water-soluble organic solvent contains an alkanediol having not less than 3 and not more than 4 carbon atoms and a glycol ether having a boiling point higher than a boiling point of the alkanediol;
the glycol ether contains an alkyl group having not less than 3 and not more than 4 carbon atoms and a diethylene glycol or triethylene glycol group; and
a mass ratio of the alkanediol to the water-soluble organic solvent except for the alkanediol (alkanediol/water-soluble organic solvent except for alkanediol) is not less than 1.4.

DETAILED DESCRIPTION OF THE INVENTION

However, the conventional aqueous inks as described in the Patent Literature 1 have posed such a problem that they are still incapable of forming good printed characters or images on a low-liquid absorbing printing medium used for soft packaging, etc.

In ink-jet printing on the low-liquid absorbing printing medium, the water-based ink tends to be hardly penetrated into the printing medium. Therefore, if the printing medium on which characters or images have been printed undergoes bending deformation, the printed characters or images are unable to follow-up the deformation of the printing medium, and as a result tend to suffer from breaking, or the coating film of the ink tends to be delaminated from the printing medium. The breaking or delamination of the printed characters or images tends to become more remarkable, in particular, when printed on a synthetic resin printing medium.

Among them, a polyolefin-based resin substrate is inexpensive and exhibits excellent properties such as moldability, chemical resistance, water resistance, etc., and therefore has been extensively used as an industrial material. However, the polyolefin-based resin substrate is a non-polar crystalline material unlike a synthetic resin having polarity such as a polyurethane, a polyamide, a polyester, etc., so that it tends to be difficult to conduct printing on such a polyolefin-based resin substrate. Thus, at the present time, a water-based ink that can be satisfactorily applied to ink-jet printing for a soft packaging substrate has not been obtained yet.

The present invention relates to a water-based ink for ink-jet printing which is excellent in ejection properties as well as bending properties (follow-up properties) against deformation of a low-liquid absorbing printing medium, and an ink-jet printing method using the water-based ink.

The present inventors have found that the aforementioned conventional problems can be solved by a water-based ink containing a pigment, a polymer dispersant and a water-soluble organic solvent in which a specific alkanediol and a specific glycol ether are used as the water-soluble organic solvent; and a mass ratio of the alkanediol to the water-soluble organic solvent except for the alkanediol [alkanediol/water-soluble organic solvent except for alkanediol] is controlled to not less than 1.4.

That is, the present invention relates to the following aspects [1] and [2].

[1] A water-based ink for ink-jet printing on a low-liquid absorbing printing medium, containing a pigment, a polymer dispersant, a water-soluble organic solvent and water, in which:

the water-soluble organic solvent contains an alkanediol having not less than 3 and not more than 4 carbon atoms and a glycol ether having a boiling point higher than a boiling point of the alkanediol; the glycol ether contains an alkyl group having not less than 3 and not more than 4 carbon atoms and a diethylene glycol or triethylene glycol group; and a mass ratio of the alkanediol to the water-soluble organic solvent except for the alkanediol (alkanediol/water-soluble organic solvent except for alkanediol) is not less than 1.4.

[2] An ink-jet printing method including the step of printing characters or images on a low-liquid absorbing printing medium using the water-based ink according to the above aspect [1].

In accordance with the present invention, it is possible to provide a water-based ink for ink-jet printing which is excellent in ejection properties as well as bending properties (follow-up properties) against deformation of a low-liquid absorbing printing medium, and an ink-jet printing method using the water-based ink.

[Water-Based Ink for Ink-Jet Printing]

The water-based ink for ink-jet printing according to the present invention is a water-based ink for ink-jet printing on a low-liquid absorbing printing medium (hereinafter also referred to merely as an "ink of the present invention"), the water-based ink containing a pigment, a polymer dispersant, a water-soluble organic solvent and water, in which:

the water-soluble organic solvent contains an alkanediol having not less than 3 and not more than 4 carbon atoms and a glycol ether having a boiling point higher than a boiling point of the alkanediol; the glycol ether contains an alkyl group having not less than 3 and not more than 4 carbon atoms and a diethylene glycol or triethylene glycol group; and a mass ratio of the alkanediol to the water-soluble organic solvent except for the alkanediol (alkanediol/water-soluble organic solvent except for alkanediol) is not less than 1.4.

Meanwhile, the term "water-based" as used herein means that water has a largest content among components of a medium contained in the water-based ink.

The term "low-liquid absorbing" as used herein means a concept including both of low-liquid absorbing properties and non-liquid absorbing properties of a printing medium against an ink. The "low-liquid absorbing" properties may be evaluated by absorption of pure water to the printing medium. More specifically, the "low-liquid absorbing" means that the water absorption per a unit surface area of the printing medium as measured by contacting the printing medium with pure water for 100 milliseconds is not less than 0 $g/m^2$ and not more than 10 $g/m^2$.

The term "printing" as used herein means a concept that includes printing or typing operation for printing characters or images.

The ink of the present invention is capable of providing a high-quality printed material that is excellent in ejection properties as well as bending properties (follow-up properties) against deformation of a low-liquid absorbing printing medium. The reason why the aforementioned advantageous effects can be attained by the present invention is considered as follows, though it is not clearly determined yet.

That is, in the present invention, as the water-soluble organic solvent, there are used the alkanediol having not less than 3 and not more than 4 carbon atoms, and the glycol ether having such a specific structure that a boiling point of the glycol ether is higher than a boiling point of the alkanediol. Although the alkanediol is hydrophilic whereas the glycol ether is hydrophobic, it is considered that in the course of drying droplets of the ink on the printing medium after the ink-jet printing, formation of a coating film of the ink is allowed to proceed while changing properties of the droplets of the ink from hydrophilic properties to hydrophobic properties, so that the resulting printed characters or images can be improved in adhesion properties and bending properties.

In addition, it is considered that by controlling a mass ratio of the alkanediol to the water-soluble organic solvent except for the alkanediol (alkanediol/water-soluble organic solvent except for alkanediol) to not less than 1.4, it is possible to adequately adjust a shape of a meniscus of the ink in respective ejection nozzles, and thereby realize good ejection properties of the ink.

<Pigment>

The pigment used in the present invention may be either an inorganic pigment or an organic pigment, and may also be used in the form of a lake pigment or a fluorescent pigment. In addition, the inorganic or organic pigment may also be used in combination with an extender pigment, if required.

Specific examples of the inorganic pigment include carbon blacks, metal oxides such as titanium oxide, iron oxide, red iron oxide, chromium oxide, etc., iridescent nacreous pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments having a white color, a black color, a gray color, etc., and chromatic color pigments having a yellow color, a magenta color, a cyan color, a blue color, a red color, an orange color, a green color, etc.

Examples of the extender pigment include silica, calcium carbonate, talc and the like.

The aforementioned pigments may be used alone or in the form of a mixture of any two or more thereof.

As the suitable configuration of the pigment used in the present invention, there may be mentioned self-dispersible pigment particles, and pigment particles formed by incorporating the pigment into the polymer dispersant. From the viewpoint of improving ejection properties of the ink as well as bending properties of the printed characters or images against deformation of a printing medium, preferred is the configuration of pigment particles formed by incorporating the pigment into the polymer dispersant, i.e., pigment-containing polymer particles A. The "pigment-containing polymer particles A" as used in the present specification are intended to include those particles having a configuration in which the pigment is incorporated in the polymer dispersant, a configuration in which the pigment is partially exposed onto the surface of respective particles formed of the polymer dispersant and the pigment, a configuration in which the polymer dispersant is adsorbed onto a part of the pigment, etc.

In the present invention, the pigment-containing polymer particles A are maintained in the ink of the present invention in such a condition that the particles having a particle size of not more than 200 nm are dispersed therein.

<Polymer Dispersant>

The polymer dispersant has a capability of dispersing the pigment in a medium containing water as a main component, and is preferably used as a component constituting the pigment-containing polymer particles A. A polymer constituting the polymer dispersant (hereinafter also referred to merely as a "polymer a") may be either a water-soluble polymer or a water-insoluble polymer. Of these polymers, preferred is the water-insoluble polymer. That is, the pigment is preferably in the form of pigment-containing water-insoluble polymer particles.

The "water-insoluble polymer" as used herein means such a polymer that when the polymer is dried to a constant weight at 105°C for 2 hours and then dissolved in 100 g of water at 25°C until reaching a saturated concentration thereof, the solubility in water of the polymer is less than 10 g. The solubility in water of the water-insoluble polymer is preferably not more than 5 g and more preferably not more than 1 g. In the case where the water-insoluble polymer is in the form of an anionic polymer, the aforementioned solubility means a solubility in water of the polymer whose anionic groups are neutralized completely (i.e., 100%) with sodium hydroxide.

The pigment-containing polymer particles A are preferably in the form of polymer particles crosslinked with a crosslinking agent as described hereinlater. In this case, even though the polymer used for dispersing the pigment is a water-soluble polymer, the polymer is transformed into a water-insoluble polymer by crosslinking the polymer with the crosslinking agent.

The ionic group contained in a molecule of the polymer a is preferably introduced into a polymer skeleton thereof by an ionic monomer (a-1) from the viewpoint of improving dispersion stability and storage stability of the pigment. More specifically, it is preferred that the polymer a contains a constitutional unit derived from the ionic monomer (a-1). Examples of the polymer a include a vinyl-based resin, a polyester-based resin, a polyurethane-based resin and the like.

Among these resins, preferred is the vinyl-based resin, and more preferred is the vinyl-based resin that is produced by copolymerizing a raw material monomer (a) containing the ionic monomer (a-1) and a hydrophobic monomer (a-2).

Thus, the vinyl-based resin preferably contains a constitutional unit derived from the component (a-1) and a constitutional unit derived from the component (a-2). The vinyl-based resin may further contain a constitutional unit derived from a nonionic monomer (a-3) from the viewpoint of improving dispersion stability, fixing properties, etc., of the pigment.

[Ionic Monomer (a-1)]

As the ionic monomer (a-1), there may be mentioned an anionic monomer and a cationic monomer. Among these monomers, preferred is an anionic monomer, more preferred is a monomer containing an acid group, and even more preferred is a monomer containing a carboxy group.

Specific examples of the ionic monomer (a-1) include those monomers described in the paragraph [0017] of JP 2018-80255A. Among these monomers, preferred is at least one monomer selected from the group consisting of acrylic acid and methacrylic acid.

[Hydrophobic Monomer (a-2)]

The term "hydrophobic" of the hydrophobic monomer (a-2) as used in the present invention means that a solubility in water of the monomer as measured by dissolving the monomer in 100 g of ion-exchanged water at 25°C until reaching a saturation concentration thereof is less than 10 g. The solubility in water of the hydrophobic monomer (a-2) is preferably not more than 5 g and more preferably not more than 1 g from the viewpoint of improving fixing properties to the pigment.

As the hydrophobic monomer (a-2), there may be mentioned an alkyl (meth)acrylate, an aromatic ring-containing monomer and a macromonomer. Among these monomers, preferred is at least one monomer selected from the group consisting of an alkyl (meth)acrylate and an aromatic ring-containing monomer, and more preferred is an aromatic ring-containing monomer.

Specific examples of the hydrophobic monomer (a-2) include those monomers described in the paragraphs [0018] to [0021] of JP 2018-80255A. Among these monomers, preferred is at least one monomer selected from the group consisting of styrene, $\alpha$-methyl styrene and benzyl (meth)acrylate.

[Nonionic Monomer (a-3)]

As the nonionic monomer (a-3), there may be mentioned a polyalkylene glycol (meth)acrylate and the like.

Specific examples the nonionic monomer (a-3) include those monomers described in the paragraphs [0022] and [0023] of JP 2018-80255A.

(Contents of Respective Components in Raw Material Monomer (a) or Contents of Respective Constitutional Units in Vinyl-Based Resin)

The contents of the components (a-1), (a-2) and (a-3) in the raw matrial monomer (a) containing these components (contents of non-neutralized components; hereinafter defined in the same way) upon production of the vinyl-based resin, or the contents of the constitutional unit derived from the component (a-1), the constitutional unit derived from the component (a-2) and the constitutional unit derived from the component (a-3) in the vinyl-based resin are as follows, from the viewpoint of improving dispersion stability of the pigment.

The content of the component (a-1) is preferably not less than 10% by mass, more preferably not less than 20% by mass and even more preferably not less than 30% by mass, and is also preferably not more than 60% by mass, more preferably not more than 50% by mass and even more preferably not more than 40% by mass.

The content of the component (a-2) is preferably not less than 30% by mass, more preferably not less than 40% by mass and even more preferably not less than 50% by mass, and is also preferably not more than 90% by mass, more preferably not more than 80% by mass and even more preferably not more than 75% by mass.

In the case where the component (a-3) is included, the content of the component (a-3) is preferably not less than 5% by mass and more preferably not less than 10% by mass, and is also preferably not more than 30% by mass and more preferably not more than 20% by mass.

The mass ratio of the component (a-1) to the component (a-2) [(a-1)/(a-2)] is preferably not less than 0.2, more preferably not less than 0.25 and even more preferably not less than 0.30, and is also preferably not more than 1.2, more preferably not more than 1.0 and even more preferably not more than 0.8.

Incidentally, the contents of the constitutional units derived from the components (a-1), (a-2) and (a-3) in the vinyl-based resin used in the present invention not only may be determined by actual measurements thereof, but also may be indicated by substitution of respective charging ratios of the components (a-1), (a-2) and (a-3) in the raw material monomer (a) containing these components upon production of the vinyl-based resin therefor. Among these components, the content of the component (a-1) may be suitably determined by potentiometric titration, whereas the contents of the components (a-2) and (a-3) may be suitably indicated by substitution of the respective charging ratios of the components (a-2) and (a-3) in the raw material monomer (a) therefor.

(Production of Vinyl-Based Resin)

The vinyl-based resin may be produced by copolymerizing the raw material monomer (a) by conventionally known polymerization methods such as a bulk polymerization method, a solution polymerization method, a suspension polymerization method, an emulsion polymerization method, etc. Among these polymerization methods, preferred is the solution polymerization method.

The solvent used in the solution polymerization method is not particularly limited, and is preferably an organic polar solvent. Examples of the organic polar solvent include aliphatic alcohols having not less than 1 and not more than 3 carbon atoms; ketones having not less than 3 and not more than 5 carbon atoms; ethers; esters such as ethyl acetate, etc.; and the like. Among these organic polar solvents, preferred is ethanol, acetone, methyl ethyl ketone or a mixed solvent of at least one of these compounds with water, and more preferred is methyl ethyl ketone or a mixed solvent of methyl ethyl ketone and water.

The polymerization may be carried out in the presence of a polymerization initiator or a polymerization chain transfer agent.

Examples of the polymerization initiator include conventionally known polymerization initiators, e.g., azo compounds such as 2,2'-azobisisobutyronitrile, 2,2'-azobis(2,4-dimethylvaleronitrile), etc., organic peroxides such as *tert*-butyl peroxyoctoate, benzoyl peroxide, etc.; and the like. The amount of the radical polymerization initiator used in the polymerization is preferably not less than 0.001 mol and not more than 5 mol, and more preferably not less than 0.01 mol and not more than 2 mol, per 1 mol of the raw material monomer (a).

Examples of the polymerization chain transfer agent include conventionally known polymerization chain transfer agents, e.g., carboxy group-containing mercaptans such as 2-mercaptopropionic acid, etc.; alkyl mercaptans such as octanethiol, etc.; hydroxy group-containing mercaptans such as 2-mercaptoethanol, 3-mercapto-1,2-propanediol, etc.; and the like.

In addition, the type of a polymerization chain of the monomer polymerized is not particularly limited, and may be of any of a random type, a block type, a grafted type, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Furthermore, the polymerization is preferably conducted in a nitrogen gas atmosphere or an atmosphere of an inert gas such as argon, etc.

After completion of the polymerization reaction, the polymer produced may be isolated from the obtained reaction solution by known methods such as reprecipitation, removal of the solvent by distillation, etc. In addition, the resulting polymer may be purified by removing the unreacted monomers, etc., from the polymer by reprecipitation, membrane separation, chromatography, extraction, etc.

The number-average molecular weight of the vinyl-based resin is preferably not less than 2,000 and more preferably not less than 5,000, and is also preferably not more than 20,000 and more preferably not more than 18,000, from the viewpoint of improving adsorptivity of the resin to the pigment and dispersion stability of the pigment.

The number-average molecular weight may be measured by the method described in Examples below.

[Production of Pigment-Containing Water-Insoluble Polymer Particles A]

The pigment-containing water-insoluble polymer particles A may be efficiently produced in the form of a pigment water dispersion thereof by a process including the following steps 1 and 2.

In addition, from the viewpoint of improving ejection properties of the resulting ink as well as bending properties of the printed characters or images against deformation of a printing medium, it is preferred that the aforementioned process further includes the step 3 (crosslinking step).

Step 1: subjecting a pigment mixture containing the pigment, the polymer a constituting the pigment-containing water-insoluble polymer particles, an organic solvent and water to dispersion treatment to obtain a dispersion treatment product;

Step 2: removing the organic solvent from the dispersion treatment product obtained in the step 1 to obtain a water dispersion of pigment-containing water-insoluble polymer particles a1 (hereinafter also referred to merely as a "pigment water dispersion (i)"); and

Step 3: adding a crosslinking agent to the pigment water dispersion (i) obtained in the step 2 to subject a part or whole of the pigment-containing water-insoluble polymer particles a1 to crosslinking reaction, thereby obtaining a water dispersion (I) of pigment-containing water-insoluble polymer particles a2 (hereinafter also referred to merely as a "pigment water dispersion (I)").

The pigment-containing water-insoluble polymer particles A according to the present invention include the pigment-containing water-insoluble polymer particles a1 and the pigment-containing water-insoluble polymer particles a2.

(Step 1)

The pigment mixture used in the step 1 is preferably obtained by the method in which the polymer a is first dissolved in an organic solvent, and then the pigment and water are added and mixed, if required together with a neutralizing agent, a surfactant, etc., into the resulting organic solvent solution to prepare a dispersion liquid of an oil-in-water type. The order of addition of the respective components to the organic solvent solution of the polymer a is not particularly limited, and it is preferred that water, the neutralizing agent and the pigment are successively added thereto in this order.

The organic solvent used in the step 1 is not particularly limited. Examples of the preferred organic solvent include ketones, ethers, esters, aliphatic alcohols having not less than 1 and not more than 3 carbon atoms, and the like. Among these organic solvents, from the viewpoint of improving wettability to the pigment, solubility of the polymer a therein and adsorptivity to the pigment, more preferred are ketones having not less than 4 and not more than 8 carbon atoms, even more preferred are methyl ethyl ketone and methyl isobutyl ketone, and further even more preferred is methyl ethyl ketone. In the case where the vinyl-based resin as the polymer a is synthesized by a solution polymerization method, the solvent used in the solution polymerization method may be directly used as such in the step 1.

The mass ratio of the organic solvent to the polymer a [organic solvent/polymer a] in the pigment mixture is preferably not less than 0.5, more preferably not less than 0.8 and even more preferably not less than 1, and is also preferably not more than 2.5, more preferably not more than 2 and even more preferably not more than 1.5, from the viewpoint of improving wettability and adsorptivity to the pigment and solubility of the polymer a in the organic solvent.

In the case where the polymer a contains acid groups, it is preferred that the acid groups are at least partially neutralized using a neutralizing agent. It is considered that by neutralizing the acid groups of the polymer a, electric repulsion force between the pigment particles which is exhibited after the neutralization tends to become large, so that it is possible to suppress flocculation of the pigment particles in the ink, prevent increase in viscosity of the ink, and improve dispersion stability of the pigment and storage stability of the resulting ink.

When neutralizing the acid groups of the polymer a, the neutralization is preferably conducted such that the pH value of the resulting dispersion falls within the range of not less than 7 and not more than 11.

Examples of the neutralizing agent include bases such as lithium hydroxide, sodium hydroxide, potassium hydroxide, ammonia, various amines and the like. Among these neutralizing agents, preferred are sodium hydroxide and ammonia.

The aforementioned neutralizing agents may be used alone or in the form of a mixture of any two or more thereof. In addition, the polymer a may be previously neutralized.

The equivalent of the neutralizing agent used is preferably not less than 10 mol%, more preferably not less than 20 mol% and even more preferably not less than 30 mol%, and is also preferably not more than 150 mol%, more preferably not more than 120 mol% and even more preferably not more than 100 mol%, from the viewpoint of improving storage stability of the resulting ink.

The equivalent of the neutralizing agent used as defined herein may be calculated according to the following formula wherein the polymer a before being neutralized is expressed by a polymer a'.

$$\text{Equivalent (mol\%) of neutralizing agent used} = [\{\text{mass (g) of neutralizing agent added/equivalent of neutralizing agent}\}/[\{\text{acid value (mgKOH/g) of polymer a' x mass (g) of polymer a'}\}/(56 \times 1{,}000)]] \times 100.$$

In the dispersion treatment of the step 1, the pigment may be atomized into fine particles having a desired particle size only by substantial dispersion treatment in which a shear stress is applied to the pigment particles. However, it is preferred that the pigment mixture is first subjected to preliminary dispersion treatment, and then further to the substantial dispersion treatment, from the viewpoint of obtaining a uniform pigment water dispersion.

Examples of a disperser used in the preliminary dispersion treatment include ordinarily used mixing and stirring devices such as an anchor blade, a disper blade, etc.

Examples of the means for applying a shear stress to the pigment particles which is used in the substantial dispersion treatment include kneading machines such as roll mills, kneaders, etc.; high-pressure homogenizers such as "Microfluidizer", etc.; and media-type dispersers such as paint shakers, beads mills, etc. Among these devices, the high-pressure homogenizers are preferably used from the viewpoint of reducing the particle size of the pigment.

(Step 2)

The step 2 is the step of removing the organic solvent from the dispersion treatment product obtained in the step 1 to obtain a pigment water dispersion (i). The removal of the organic solvent from the dispersion treatment product may be conducted by conventionally known methods. The organic solvent is preferably substantially completely removed from the thus obtained pigment water dispersion (i). However, the residual organic solvent may be present in the pigment water dispersion (i) unless the objects and advantageous effects of the present invention are adversely affected by the residual organic solvent. The content of the residual organic solvent in the pigment water dispersion (i) is preferably not more than 0.1% by mass and more preferably not more than 0.01% by mass.

(Step 3)

The step 3 is the step of adding a crosslinking agent to the pigment water dispersion (i) obtained in the step 2 to subject the pigment-containing water-insoluble polymer particles a1 to crosslinking reaction, thereby obtaining a pigment water dispersion (I) of pigment-containing water-insoluble polymer particles a2.

In the step 3, carboxy groups of the polymer a constituting the pigment-containing water-insoluble polymer particles a1 are partially or wholly crosslinked to form a crosslinked structure in a part or whole of the pigment-containing water-insoluble polymer particles a1. It is considered that by forming such a crosslinked structure, the polymer is firmly adsorbed and fixed onto the surface of the pigment, and the pigment is inhibited from suffering from flocculation thereof, so that the ejection properties of the resulting ink as well as the bending properties of the resulting printed characters or images can be further improved.

(Crosslinking Agent)

As the crosslinking agent, from the viewpoint of efficiently conducting the crosslinking reaction as well as from the viewpoint of improving storage stability of the resulting ink, preferred is a compound containing not less than 2 and not more than 6, preferably not more than 4, epoxy groups in a molecule thereof, more preferred is a compound containing not less than 2 glycidyl ether groups in a molecule thereof, and even more preferred is a polyglycidyl ether compound of a polyhydric alcohol containing a hydrocarbon group having not less than 3 and not more than 8 carbon atoms in a molecule thereof.

The molecular weight of the crosslinking agent is preferably not less than 120, more preferably not less than 150 and even more preferably not less than 200, and is also preferably not more than 2,000, more preferably not more than 1,500 and even more preferably not more than 1,000, from the viewpoint of facilitating the crosslinking reaction as well as from the viewpoint of improving storage stability of the resulting ink.

The epoxy equivalent of the crosslinking agent is preferably not less than 90, more preferably not less than 100 and even more preferably not less than 110, and is also preferably not more than 300, more preferably not more than 200 and even more preferably not more than 150.

From the viewpoint of efficiently conducting the crosslinking reaction of the carboxy groups of the polymer a with the crosslinking agent in a medium containing water as a main component, the water solubility rate of the crosslinking agent is preferably not more than 50% by mass, more preferably not more than 40% by mass and even more preferably not more than 35% by mass. The "water solubility rate" of the crosslinking agent as used herein means a rate (% by mass) of dissolution of the crosslinking agent as measured by dissolving 10 parts by mass of the crosslinking agent in 90 parts by mass of water at room temperature (25°C).

Specific examples of the crosslinking agent include polyglycidyl ethers such as polypropylene glycol diglycidyl ether (water solubility rate: 31% by mass), glycerol polyglycidyl ether, polyglycerol polyglycidyl ether, trimethylolpropane polyglycidyl ether (water solubility rate: 27% by mass), sorbitol polyglycidyl ether, pentaerythritol polyglycidyl ether (water solubility rate: 0% by mass), resorcinol diglycidyl ether, neopentyl glycol diglycidyl ether, 1,6-hexanediol diglycidyl ether, hydrogenated bisphenol A-type diglycidyl ethers, etc., and the like. Of these crosslinking agents, preferred is at least one compound selected from the group consisting of trimethylolpropane polyglycidyl ether and pentaerythritol polyglycidyl ether, and more preferred is trimethylolpropane polyglycidyl ether.

The crosslinking rate of the polymer in the step 3 as calculated in terms of a ratio of a mole equivalent number of crosslinkable functional groups of the crosslinking agent to a mole equivalent number of the carboxy groups of the polymer a is preferably not less than 10 mol%, more preferably not less than 20 mol%, even more preferably not less than 30 mol% and further even more preferably not less than 40 mol%, and is also preferably not more than 80 mol%, more preferably not more than 70 mol% and even more preferably not more than 60 mol%, from the viewpoint of improving storage srtability of the resulting ink.

From the same viewpoint as described above, the temperature used in the crosslinking treatment is preferably not lower than 40°C, more preferably not lower than 50°C and even more preferably not lower than 60°C, and is also preferably not higher than 95°C, more preferably not higher than 85°C and even more preferably not higher than 75°C.

From the viewpoint of completing the crosslinking reaction and attaining good cost efficiency, the time of the crosslinking treatment is preferably not less than 0.5 hour, more preferably not less than 1 hour and even more preferably not less than 1.5 hours, and is also preferably not more than 12 hours, more preferably not more than 10 hours, even more preferably not more than 8 hours and further even more preferably not more than 5 hours.

The solid content of the pigment water dispersion (I) is preferably not less than 10% by mass and more preferably not less than 15% by mass, and is also preferably not more than 40% by mass and more preferably not more than 35% by mass, from the viewpoint of improving dispersion stability of the pigment water dispersion (I) as well as from the viewpoint of facilitating production of the ink. The solid content may be measured by the method described in Examples below.

The content of the pigment in the pigment water dispersion (I) is preferably not less than 5% by mass, more preferably not less than 7% by mass and even more preferably not less than 10% by mass, and is also preferably not more than 40% by mass, more preferably not more than 30% by mass and even more preferably not more than 20% by mass, from the viewpoint of improving dispersion stability of the pigment water dispersion.

The mass ratio of the pigment to the polymer a [pigment/polymer a] in the pigment water dispersion (I) is preferably not less than 50/50, more preferably not less than 55/45 and even more preferably not less than 60/40, and is also preferably not more than 90/10, more preferably not more than 85/15 and even more preferably not more than 80/20.

The average particle size of the pigment water dispersion (I) is preferably not less than 40 nm, more preferably not less than 50 nm, even more preferably not less than 60 nm, further even more preferably not less than 70 nm and still further even more preferably not less than 80 nm, and is also preferably not more than 200 nm, more preferably not more than 150 nm, even more preferably not more than 130 nm, further even more preferably not more than 110 nm and still further even more preferably not more than 100 nm, from the viewpoint of improving storage stability of the resulting ink.

The average particle size may be measured by the method described in Examples below.

<Pigment-Free Water-Insoluble Polymer Particles B>

The ink of the present invention preferably further contains pigment-free water-insoluble polymer particles B from the viewpoint of improving fixing properties and storage stability of the resulting ink.

The pigment-free water-insoluble polymer particles B are preferably those polymer particles that are allowed to be present in the form of a dispersion thereof in a medium containing water as a main component.

A water-insoluble polymer b constituting the pigment-free water-insoluble polymer particles B (hereinafter also referred to merely as a "polymer b") is preferably at least one resin selected from the group consisting of an acrylic resin, a polyester resin and a polyurethane resin. Among these resins as the polymer b, more preferred is such an acrylic resin that contains a constitutional unit derived from (meth)acrylic acid (b-1) and a constitutional unit derived from a (meth)acrylic acid ester (b-2).

The term "water-insoluble" of the water-insoluble polymer b has the same definition as that of the aforementioned polymer a. The solubility of the polymer b means a solubility in water of the polymer b whose carboxy groups are neutralized completely (i.e., 100%) with sodium hydroxide.

[(Meth)acrylic Acid (b-1)]

The (meth)acrylic acid (b-1) is preferably at least one compound selected from the group consisting of acrylic acid and methacrylic acid, and more preferably methacrylic acid, from the viewpoint of improving fixing properties and storage stability of the resulting ink.

[(Meth)acrylic Acid Ester (b-2)]

As the (meth)acrylic acid ester (b-2), from the viewpoint of improving fixing properties and storage stability of the resulting ink, preferred is at least one compound selected from the group consisting of methyl (meth)acrylate, butyl (meth)acrylate, isobutyl (meth)acrylate, *tert*-butyl (meth)acrylate, 2-ethylhexyl (meth)acrylate and cyclohexyl (meth)acrylate, more preferred is at least one compound selected from the group consisting of methyl (meth)acrylate, butyl (meth)acrylate, 2-ethylhexyl (meth)acrylate and cyclohexyl (meth)acrylate, and even more preferred is 2-ethylhexyl (meth)acrylate.

[Aromatic Group-Containing Monomer (b-3)]

The polymer b may also further contain a constitutional unit derived from a monomer other than the aforementioned (meth)acrylic acid (b-1) and (meth)acrylic acid ester (b-2). Examples of the other monomer include an ionic monomer other than (meth)acrylic acid, an aromatic group-containing hydrophobic monomer and a nonionic monomer. Among these other monomers, preferred is the aromatic group-containing hydrophobic monomer (hereinafter also referred to merely as an "aromatic group-containing monomer (b-3)").

Specific examples of the aromatic group-containing monomer (b-3) include the aforementioned styrene-based monomer, an aromatic group-containing (meth)acrylate, an aromatic group-containing monomer-based macromonomer, and the like.

The content of the constitutional unit derived from the (meth)acrylic acid (b-1) in the polymer b is preferably not less than 1% by mass, more preferably not less than 1.5% by mass and even more preferably not less than 2% by mass, and is also preferably not more than 20% by mass, more preferably not more than 10% by mass and even more preferably not more than 5% by mass, from the viewpoint of improving fixing properties and storage stability of the resulting ink.

The content of the constitutional unit derived from the (meth)acrylic acid ester (b-2) in the polymer b is preferably not less than 80% by mass, more preferably not less than 90% by mass and even more preferably not less than 95% by mass, and is also preferably not more than 99% by mass, more preferably not more than 98.5% by mass and even more preferably not more than 98% by mass, from the viewpoint of improving fixing properties and storage stability of the resulting ink.

The mass ratio of the (meth)acrylic acid (b-1) to the (meth)acrylic acid ester (b-2) [(meth)acrylic acid (b-1)/(meth)acrylic acid ester (b-2)] is preferably not less than 0.01 and more preferably not less than 0.02, and is also preferably not more than 0.5, more preferably not more than 0.2 and even more preferably not more than 0.1.

The weight-average molecular weight of the polymer b is preferably not less than 10,000, more preferably not less than 50,000 and even more preferably not less than 100,000, and is also preferably not more than 2,000,000, more preferably not more than 1,500,000 and even more preferably not more than 1,200,000, from the viewpoint of improving fixing properties and storage stability of the resulting ink.

The weight-average molecular weight may be measured by the method descried in Examples below.

The glass transition temperature of the polymer b is not lower than 0°C, preferably not lower than 10°C, more preferably not lower than 20°C, even more preferably not lower than 25°C and further even more preferably not lower than 30°C, and is also not higher than 75°C, preferably not higher than 70°C and more preferably not higher than 60°C.

The glass transition temperature may be measured by the method descried in Examples below.

The average particle size of the pigment-free water-insoluble polymer particles B is preferably not less than 10 nm, more preferably not less than 30 nm and even more preferably not less than 50 nm, and is also preferably not more than 250 nm, more preferably not more than 200 nm and even more preferably not more than 150 nm, from the viewpoint of improving fixing properties and storage stability of the resulting ink. The average particle size may be measured by the method descried in Examples below.

[Production of Pigment-Free Water-Insoluble Polymer Particles B]

As the pigment-free water-insoluble polymer particles B, there may be used either an appropriately synthesized product or a commercially available product. The pigment-free water-insoluble polymer particles B are preferably used in the form of a water dispersion liquid thereof.

Upon producing the water dispersion liquid of the pigment-free water-insoluble polymer particles B, the polymer b constituting the pigment-free water-insoluble polymer particles B is preferably neutralized with a neutralizing agent.

The water dispersion liquid of the pigment-free water-insoluble polymer particles B may be produced by such a method in which after obtaining the polymer b' as the polymer before the neutralization by conventionally known polymerization methods, a mixture containing the polymer b' and water, if required together with a neutralizing agent, is stirred while heating, followed by cooling the mixture, and the like.

The preferred constitutional units, contents of the constitutional units, properties and the like of the polymer b' are the same as those of the polymer b. The polymer b' is preferably produced by the same polymerization method as used for production of the aforementioned vinyl-based resin.

The acid value of the polymer b' is preferably not less than 0 mgKOH/g, more preferably not less than 5 mgKOH/g, even more preferably not less than 10 mgKOH/g and further even more preferably not less than 15 mgKOH/g, and is also preferably not more than 200 mgKOH/g, more preferably not more than 100 mgKOH/g, even more preferably not more than 50 mgKOH/g and further even more preferably not more than 20 mgKOH/g.

The temperature used upon stirring the aforementioned mixture is preferably not lower than 60°C, more preferably not lower than 70°C and even more preferably not lower than 750°C, and is also preferably not higher than 100°C, more preferably not higher than 95°C and even more preferably not higher than 90°C. The stirring time is preferably not less than 0.5 hour and more preferably not less than 0.8 hour, and is also preferably not more than 10 hours and more preferably not more than 5 hours.

As the neutralizing agent used for producing the water dispersion liquid of the pigment-free water-insoluble polymer particles B, preferred are alkali metal hydroxides such as lithium hydroxide, sodium hydroxide, potassium hydroxide, etc., ammonia, organic amines, and the like, and more preferred are sodium hydroxide and triethanolamine.

The equivalent of the neutralizing agent used is not less than 0 mol%, preferably not less than 10 mol%, more preferably not less than 30 mol% and even more preferably not less than 50 mol%, and is also preferably not more than 160 mol%, more preferably not more than 130 mol% and even more preferably not more than 110 mol%, from the viewpoint of improving dispersion stability of the pigment-free water-insoluble polymer particles B. The equivalent of the neutralizing agent used may be determined by the aforementioned method.

[Production of Ink of the Present Invention]

The ink of the present invention may be efficiently produced by mixing the pigment water dispersion (I) and the below-mentioned water-soluble organic solvent, if required together with the water dispersion liquid of the pigment-free water-insoluble polymer particles B and a surfactant, and further with the other organic solvent(s). The method of mixing these components is not particularly limited.

<Water-Soluble Organic Solvent>

The water-soluble organic solvent used in the present invention may be present either in a liquid state or in a solid state as measured at 25°C. However, a solubility in water of the water-soluble organic solvent as measured by dissolving the organic solvent in 100 mL of water at 25°C is not less than 10 mL.

The water-soluble organic solvent used in the ink of the present invention contains an alkanediol having not less than 3 and not more than 4 carbon atoms and a glycol ether having a boiling point that is higher than a boiling point of the alkanediol, from the viewpoint of improving ejection properties of the resulting ink as well as bending properties of the printed characters or images against deformation of a printing medium.

In the present invention, the alkanediol having not less than 3 and not more than 4 carbon atoms is first selected, and the glycol ether is then selected by taking into account the boiling point of the alkanediol such that the glycol ether has such a specific structure that the boiling point of the glycol ether is higher than the boiling point of the alkanediol. The thus selected alkanediol and glycol ether are used in combination with each other.

As the alkanediol having not less than 3 and not more than 4 carbon atoms which is used in the ink of the present invention, there may be mentioned at least one compound selected from the group consisting of 1,2-propanediol (boiling point: 188°C), 1,3-propanediol (boiling point: 210°C), 1,2-butanediol (boiling point: 192°C), 1,3-butanediol (boiling point: 207°C), 1,4-butanediol (boiling point: 230°C) and diethylene glycol (boiling point: 245°C).

The boiling points of these alkanediols having not less than 3 and not more than 4 carbon atoms which are used in the ink of the present invention fall within the temperature range of from 188°C to 245°C.

Among these alkanediols, from the viewpoint of improving ejection properties of the resulting ink as well as bending properties of the printed characters or images against deformation of a printing medium, preferred is at least one compound selected from the group consisting of 1,2-propanediol (boiling point: 188°C), 1,3-propanediol (boiling point: 210°C) and 1,2-butanediol (boiling point: 192°C).

The glycol ether used in the ink of the present invention contains an alkyl group having not less than 3 and not more than 4 carbon atoms and a diethylene glycol or triethylene glycol group, and has a boiling point that is higher than the boiling point of the aforementioned alkanediol having not less than 3 and not more than 4 carbon atoms which is used in the ink of the present invention.

Specific examples of the glycol ether include diethylene glycol monomethyl ether (boiling point: 194°C), diethylene glycol monoethyl ether (boiling point: 202°C), diethylene glycol monoisopropyl ether (boiling point: 207°C), diethylene glycol monobutyl ether (boiling point: 231°C), diethylene glycol monoisobutyl ether (boiling point: 230°C), triethylene glycol monomethyl ether (boiling point: 249°C), triethylene glycol monobutyl ether (boiling point: 274°C), triethylene glycol monoisobutyl ether, and the like.

Of these glycol ethers, from the viewpoint of improving ejection properties of the resulting ink as well as bending properties of the printed characters or images against deformation of a printing medium, preferred is at least one compound selected from the group consisting of diethylene glycol monoisopropyl ether (boiling point: 207°C), diethylene glycol monobutyl ether (boiling point: 231°C), diethylene glycol monoisobutyl ether (boiling point: 230°C) and triethylene glycol monobutyl ether (boiling point: 274°C).

The ink of the present invention may also contain the other organic solvent(s) in addition to the aforementioned alkanediol and glycol ether , if required. Examples of the other organic solvent(s) include a polyhydric alcohol, a polyhydric alcohol alkyl ether, a nitrogen-containing heterocyclic compound, an amide, an amine, a sulfur-containing compound and the like.

Examples of the polyhydric alcohol include ethylene glycol (boiling point: 197°C; in this paragraph, the following numerical values in the parentheses represent boiling points of respective compounds); 1,2-alkanediols having not less than 5 and not more than 10 carbon atoms, such as 1,2-pentanediol (210°C), 1,2-hexanediol (224°C), 1,2-octanediol (131°C), 1,2-decanediol (255°C), etc.; 1,3-alkanediols having not less than 5 and not more than 8 carbon atoms, such as 1,3-propanediol (230°C), 3-methyl-1,3-butanediol (203°C), 2-ethyl-1,3-hexanediol (244°C), etc.; polyalkylene glycols such as triethylene glycol (287°C), etc.; and 1,2,6-hexanetriol (346°C), 1,2,4-butanetriol (345°C), 1,2,3-butanetriol (293°C), petriol (216°C; 0.5 mmHg), 1,8-octanediol (299°C), etc.

Examples of the polyhydric alcohol alkyl ether include ethylene glycol monoethyl ether, ethylene glycol monoisopropyl ether, ethylene glycol monopropyl ether, ethylene glycol monobutyl ether, tetraethylene glycol monomethyl ether (boiling point: 158°C; 5 mmHg), tripropylene glycol monobutyl ether and the like.

The ink of the present invention preferably contains a surfactant from the viewpoint of improving wettability of the ink to a printing medium. In addition, the ink may also contain various additives that may be usually used in inks, such as a humectant, a wetting agent, a viscosity modifier, a defoaming agent, an antiseptic agent, a mildew-proof agent, a rust preventive, etc.

(Surfactant)

The surfactant is preferably a nonionic surfactant. From the viewpoint of maintaining adequate surface tension of the ink to thereby improve wettability of the ink to a printing medium, the surfactant is more preferably at least one surfactant selected from the group consisting of an acetylene glycol-based surfactant and a silicone-based surfactant, and it is even more preferred that the acetylene glycol-based surfactant and the silicone-based surfactant are used in combination with each other.

(Acetylene Glycol-Based Surfactant)

Examples of the acetylene glycol-based surfactant include acetylene-based diols such as 2,4,7,9-tetramethyl-5-decyne-4,7-diol, 3,6-dimethyl-4-octyne-3,6-diol, 3,5-dimethyl-1-hexyne-3-ol, 2,4-dimethyl-5-hexyne-3-ol, 2,5-dimethyl-3-hexyne-2,5-diol, 2,5,8,11-tetramethyl-6-dodecyne-5,8-diol, etc., and ethyleneoxide adducts of these compounds.

The sum (n) of average molar numbers of addition of ethyleneoxide groups (EO) in the aforementioned ethyleneoxide adducts is preferably not less than 1 and more preferably not less than 1.5, and is also preferably not more than 20 and more preferably not more than 10.

Examples of commercially available products of the acetylene glycol-based surfactant include "SURFYNOL" series products and "OLFINE" series products both available from Nissin Chemical Co., Ltd., and "ACETYLENOL" series products available from Kawaken Fine Chemicals Co., Ltd., and the like. Of these commercially available products of the acetylene glycol-based surfactant, preferred are "SURFYNOL 420" (n: 1.3), "SURFYNOL 440" (n: 3.5), "SURFYNOL 465" (n: 10.0), "SURFYNOL 485" (n: 30.0), "OLFINE E1010", "ACETYLENOL E100", "ACETYLENOL E200", "ACETYLENOL E40" (n: 4), "ACETYLENOL E60" (n: 6), "ACETYLENOL E81" (n: 8), "ACETYLENOL E100" (n: 10), and the like.

(Silicone-Based Surfactant)

Examples of the silicone-based surfactant include dimethyl polysiloxane, a polyether-modified silicone, an amino-modified silicone, a carboxy-modified silicone, and the like. Of these silicone-based surfactants, from the same viewpoint as described above, preferred is the polyether-modified silicone.

The polyether-modified silicone-based surfactant has such a structure that a hydrocarbon group bonded to a side chain and/or a terminal end of a silicone oil is substituted with a polyether group. Examples of the suitable polyether group include a polyethyleneoxy group, a polypropyleneoxy group and a polyalkyleneoxy group formed by addition-bonding an ethyleneoxy group (EO) and a propyleneoxy group (PO) to each other in a block form or a random form. More specifically, as the polyether-modified silicone-based surfactant, there may be used a compound formed by grafting a polyether group to a main chain of a silicone, a compound formed by bonding a silicone and a polyether group to each other in a block form, and the like.

The HLB (hydrophile lipophile balance) value of the polyether-modified silicone-based surfactant is preferably not less than 2, more preferably not less than 3 and even more preferably not less than 4 from the viewpoint of improving solubility of the polyether-modified silicone-based surfactant in the ink. The HLB value as used herein may be measured by a Griffin method.

In addition, the kinematic viscosity of the polyether-modified silicone-based surfactant as measured at 25°C is preferably not less than 50 mm$^2$/s and more preferably not less than 80 mm$^2$/s, and is also preferably not more than 500 mm$^2$/s and more preferably not more than 300 mm$^2$/s. Meanwhile, the kinematic viscosity may be measured using a Ubbelohde viscometer.

Specific examples of commercially available products of the polyether-modified silicone-based surfactant include "KF" series products available from Shin-Etsu Chemical Co., Ltd., such as "KF-353", "KF-355A", "KF-642", etc.; "SILFACE SAG005" available from Nissin Chemical Co., Ltd.,;

"FZ-2191" available from NUC Co., Ltd.; "BYK-348" available from BYK Chemie Japan K.K.; and the like.

The contents of the respective components in the ink of the present invention as well as properties of the ink are as follows.

(Content of Pigment)

The content of the pigment in the ink of the present invention is preferably not less than 1% by mass, more preferably not less than 3% by mass and even more preferably not less than 5% by mass from the viewpoint of enhancing optical density of the resulting ink, and is also preferably not more than 15% by mass, more preferably not more than 10% by mass and even more preferably not more than 7% by mass from the viewpoint of reducing viscosity of the ink upon volatilizing the solvent therefrom as well as from the viewpoint of improving storage stability of the resulting ink.

(Content of Pigment-Containing Water-Insoluble Polymer Particles A)

The content of the pigment-containing water-insoluble polymer particles A in the ink of the present invention is preferably not less than 3% by mass, more preferably not less than 5% by mass and even more preferably not less than 7% by mass from the viewpoint of enhancing optical density of the resulting ink, and is also preferably not more than 15% by mass, more preferably not more than 13% by mass and even more preferably not more than 10% by mass from the viewpoint of improving storage stability of the resulting ink.

(Content of Pigment-Free Water-Insoluble Polymer Particles B)

The content of the pigment-free water-insoluble polymer particles B in the ink of the present invention is preferably not less than 0.3% by mass, more preferably not less than 1% by mass and even more preferably not less than 2% by mass, and is also preferably not more than 15% by mass, more preferably not more than 10% by mass and even more preferably not more than 8% by mass, from the viewpoint of improving fixing properties of the resulting ink.

(Content of Water-Soluble Organic Solvent)

The content of the water-soluble organic solvent in the ink of the present invention is preferably not less than 5% by mass, more preferably not less than 10% by mass and even more preferably not less than 15% by mass, and is also preferably not more than 50% by mass, more preferably not more than 45% by mass and even more preferably not more than 40% by mass, from the viewpoint of improving ejection properties of the resulting ink as well as bending properties of the printed characters or images against deformation of a printing medium.

The content of the alkanediol having not less than 3 and not more than 4 carbon atoms in the water-soluble organic solvent is preferably not less than 40% by mass, more preferably not less than 45% by mass and even more preferably not less than 50% by mass, and is also preferably not more than 90% by mass, more preferably not more than 80% by mass and even more preferably not more than 70% by mass, from the viewpoint of improving ejection properties of the resulting ink as well as bending properties of the printed characters or images against deformation of a printing medium.

The mass ratio of the alkanediol having not less than 3 and not more than 4 carbon atoms to the water-soluble organic solvent except for the alkanediol (alkanediol/water-soluble organic solvent except for alkanediol) is not less than 1.4, and is also preferably not more than 5, more preferably not more than 4, even more preferably not more than 3 and further even more preferably not more than 2.5, from the same viewpoint as described above. More specifically, from the same viewpoint as described above, the aforementioned mass ratio is preferably not less than 1.4 and not more than 5, more preferably not less than 1.4 and not more than 4, even more preferably not less than 1.4 and not more than 3, and further even more preferably not less than 1.4 and not more than 2.5.

(Content of Surfactant)

The content of the surfactant in the ink of the present invention is preferably not less than 0.1% by mass, more preferably not less than 0.2% by mass and even more preferably not less than 0.5% by mass, and is also preferably not more than 5% by mass, more preferably not more than 4% by mass and even more preferably not more than 3% by mass, from the viewpoint of improving wettability of the ink to a printing medium.

The content of the acetylene glycol-based surfactant in the ink of the present invention is preferably not less than 0.2% by mass, more preferably not less than 0.4% by mass and even more preferably not less than 0.6% by mass, and is also preferably not more than 4% by mass, more preferably not more than 3% by mass and even more preferably not more than 2% by mass, from the same viewpoint as described above.

The content of the silicone-based surfactant in the ink of the present invention is preferably not less than 0.01% by mass, more preferably not less than 0.03% by mass and even more preferably not less than 0.05% by mass, and is also preferably not more than 3% by mass, more preferably not more than 2% by mass and even more preferably not more than 1% by mass, from the same viewpoint as described above.

(Content of Water)

The content of water in the ink of the present invention is preferably not less than 30% by mass, more preferably not less than 40% by mass and even more preferably not less than 50% by mass, and is also preferably not more than 90% by mass, more preferably not more than 80% by mass and even more preferably not more than 70% by mass, from the viewpoint of improving ejection properties of the resulting ink as well as bending properties of the printed characters or images against deformation of a printing medium.

(Mass Ratio of (Pigment-Containing Water-Insoluble Polymer Particles A/Whole Water-Soluble Organic Solvents))

The mass ratio of the pigment-containing water-insoluble polymer particles A to the whole water-soluble organic solvents (pigment-containing water-insoluble polymer particles A/whole water-soluble organic solvents) is preferably not less than 0.05, more preferably not less than 0.1 and even more preferably not less than 0.15, and is also preferably not more than 0.5, more preferably not more than 0.45 and even more preferably not more than 0.4, from the viewpoint of improving ejection properties of the resulting ink as well as bending properties of the printed characters or images against deformation of a printing medium.

(Properties of Ink of the Present Invention)

The viscosity of the ink of the present invention as measured at 32°C is preferably not less than 2 mPa•s, more preferably not less than 3 mPa•s and even more preferably not less than 5 mPa•s, and is also preferably not more than 12 mPa•s, more preferably not more than 9 mPa•s and even more preferably not more than 7 mPa•s, from the viewpoint of improving ejection properties of the resulting ink as well as bending properties of the printed characters or images against deformation of a printing medium.

The viscosity of the ink of the present invention may be measured by the method described in Examples below.

The pH value of the ink of the present invention is preferably not less than 7.0, more preferably not less than 7.2 and even more preferably not less than 7.5, and is also preferably not more than 11, more preferably not more than 10 and even more preferably not more than 9.5, from the viewpoint of improving storage stability of the resulting ink as well as from the viewpoint of improving the resistance of members to the ink and suppressing skin irritation.

The ink of the present invention is especially suitably used in printing for soft packaging. Incidentally , the term "printing for soft packaging" as used therein means such a printing operation that is conducted on a single member formed of a thin flexible material, such as a resin film, etc., or a laminated member formed thereof. The printed material obtained by conducting the printing for soft packaging using the ink of the present invention is suitably used in the applications of packaging of foods, living wares, etc.

The inks of the present invention are preferably used in combination with each other to provide a set of the inks, which can be suitably used for full color printing.

[Ink-Jet Printing Method]

The ink-jet printing method of the present invention is a method of printing characters or images on a low-liquid absorbing printing medium using the ink of the present invention. In the ink-jet printing method, the ink of the present invention is loaded to a conventionally known ink-jet printing apparatus from which droplets of the ink are ejected onto the low-liquid absorbing printing medium to print characters or images, etc., on the printing medium.

(Low-Liquid Absorbing Printing Medium)

Examples of the low-liquid absorbing printing medium include a low-liquid absorbing coated paper and a resin film.

Examples of the coated paper include a versatile glossy coated paper, a multi-color foam glossy coated paper, and the like.

As the resin film, there may be mentioned a transparent synthetic resin film. Examples of the resin film include a polyester film, a polyvinyl chloride film, a polypropylene film, a polyethylene film, a nylon film and the like. These resin films may be in the form of either a biaxially oriented film, a monoaxially oriented film or a non-oriented film. Among these resin films, preferred are a polyester film and an oriented polypropylene film, and more preferred are a polyester film such as a polyethylene terephthalate (PET) film subjected to corona discharge treatment, etc., and an oriented polypropylene film such as a biaxially oriented polypropylene (OPP) film subjected to corona discharge treatment, etc.

(Ink-Jet Printing Apparatus)

As the ink-jet printing apparatus, there may be used either a thermal type ink-jet printer or a piezoelectric type ink-jet printer. Among these ink-jet printing apparatuses, preferred is a piezoelectric type ink-jet printer. In the piezoelectric type ink-jet printer, a number of nozzles are communicated with respective pressure chambers, and droplets of the ink are ejected from the nozzles by vibrating a wall surface of the respective pressure chambers by means of a piezoelectric element.

The voltage applied to a print head of the ink-jet printing apparatus is preferably not less than 5 V, more preferably not less than 10 V and even more preferably not less than 15 V, and is also preferably not more than 40 V, more preferably not more than 35 V and even more preferably not more than 30 V, from the viewpoint of conducting high-speed printing with high efficiency, etc.

The drive frequency of the ink-jet printing apparatus is preferably not less than 2 kHz, more preferably not less than 5 kHz and even more preferably not less than 8 kHz, and is also preferably not more than 80 kHz, more preferably not more than 70 kHz and even more preferably not more than 60 kHz, from the viewpoint of conducting high-speed printing with high efficiency, etc.

The amount of droplets of the ink ejected is preferably not less than 0.5 pL, more preferably not less than 1.0 pL, even more preferably not less than 1.5 pL and further even more preferably not less than 1.8 pL, and is also preferably not more than 20 pL, more preferably not more than 15 pL and even more preferably not more than 13 pL, as calculated per one ink droplet ejected, from the viewpoint of maintaining accuracy of impact positions of the ink droplets and improving quality of the resulting printed characters or images.

The print head resolution is preferably not less than 400 dpi (dot/inch), more preferably not less than 500 dpi and even more preferably not less than 550 dpi.

The temperature of a surface of the printing medium (a surface temperature of a region of the printing medium opposed to a region of the printing head from which the ink is ejected) is preferably not higher than 70°C, more preferably not higher than 65°C, even more preferably not higher than 60°C and further even more preferably not higher than 55°C from the viewpoint of suppressing thermal deformation of the resulting printed material and saving an energy consumed, and is also preferably not lower than 30°C, more preferably not lower than 35°C, even more preferably not lower than 40°C and further even more preferably not lower than 45°C from the viewpoint of preventing occurrence of color bleeding of the ink.

The temperature of the printing medium may be controlled by adjusting a temperature of an under heater disposed on a rear side of the printing medium which was opposed to the print head. In the case where a plurality of print heads are provided, it is preferred that a plurality of under heaters are disposed at positions opposed to the respective print heads.

The printing speed is preferably not less than 10 m/min, more preferably not less than 15 m/min and even more preferably not less than 20 m/min in terms of a transportation speed of the printing medium in the direction along which the printing medium is moved, from the viewpoint of enhancing productivity of printed materials, and is also preferably not more than 150 m/min in terms of a transportation speed of the printing medium from the viewpoint of improving operability of the ink-jet printing apparatus.

In the ink-jet printing method, in order to prevent occurrence of color bleeding between droplets of respective inks even in the case where after ejecting one kind of ink to the printing medium to print characters or images thereon, the next ink is successively ejected thereon, there may also be further disposed a fixing and curing means for applying a heat energy thereto, such as a heater, etc.

EXAMPLES

In the following Production Examples, Preparation Examples, Examples and Comparative Examples, the "part(s)" and "%" indicate "part(s) by mass" and "% by mass", respectively, unless otherwise specified. Incidentally, the respective properties, etc., were measured by the following methods.

(1) Measurement of Number-Average Molecular Weight and Weight-Average Molecular Weight of Polymer

The number-average molecular weight and weight-average molecular weight of the polymer were measured by gel permeation chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in N,N-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture with a magnetic stirrer at 25°C for 10 hours, and then subjecting the mixture to filtration treatment through a syringe filter "DISMIC-13HP" (formed of PTFE; 0.2 $\mu$m) available from Advantec Co., Ltd.

(2) Measurement of Average Particle Sizes of Pigment-Containing Water-Insoluble Polymer Particles A and Pigment-Free Water-Insoluble Polymer Particles B

The cumulant analysis of the particles was conducted using a laser particle analyzing system "ELS-8000" available from Otsuka Electrics Co., Ltd., to measure an average particle size thereof. In the measurement, there was used a dispersion liquid diluted with water such that a concentration of the particles to be measured in the dispersion liquid was adjusted to $5 \times 10^{-3}\%$ by weight (in terms of a solid content thereof). The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as respective average particle sizes of the pigment-containing water-insoluble polymer particles A and the pigment-free water-insoluble polymer particles B.

(3) Measurement of Solid Content

Sodium sulfate dried to constant weight in a desiccator was weighed in an amount of 10.0 g and charged into a 30 mL polypropylene container ($\phi$: 40 mm; height: 30 mm), and about 1.0 g of a sample to be measured was added to the container. The contents of the container were mixed with each other and then accurately weighed. The resulting mixture was maintained in the container at 105°C for 2 hours to remove volatile components therefrom, and further allowed to stand in a desiccator adjusted to room temperature (25°C) for 15 minutes, followed by measuring a mass thereof. The mass of the sample after removing the volatile components therefrom was regarded as a mass of solids therein. The solid content of the sample was calculated by dividing the mass of the solids by the mass of the sample initially added.

(4) Measurement of Water Solubility Rate of Epoxy Compound

A glass tube (25 mm$\phi$ in diameter x 250 mm in height) was charged with 90 parts by mass of ion-exchanged water and 10 parts by mass (W1) of an epoxy compound at room temperature (25°C). The glass tube thus charged was allowed to stand for 1 hour in a thermostatic bath adjusted to a water temperature of 25°C. Next, the contents of the glass tube were vigorously shaken for 1 minute, and then the glass tube was placed again in the thermostatic bath and allowed to stand in the thermostatic bath for 12 hours. Then, undissolved components that were separated from water and precipitated or floated in the dispersion were recovered therefrom and then dried at 40°C under the environmental condition of a gauge pressure of -0.08 MPa for 6 hours, followed by measuring a mass (W2) of the thus dried product. The water solubility rate (% by mass) of the epoxy compound was calculated according to the following formula.

$$\text{Water Solubility Rate (\% by mass)} = \{(W1 - W2)/W1\} \times 100$$

(5) Measurement of Boiling Point of Organic Solvent

The boiling point of the organic solvent was measured according to JIS K2254, and an initial boiling point of the organic solvent thus meaured was defiend as the boiling point (bp) of the organic solvent.

Production Example 1 (Production of Solution of Water-Insoluble Polymer a)

A monomer mixed solution was prepared by mixing 61.1 parts of acrylic acid available from FUJIFILM Wako Pure Chemical Corporation, 128.8 parts of styrene available from FUJIFILM Wako Pure Chemical Corporation and 9.6 parts of $\alpha$-methyl styrene available from FUJIFILM Wako Pure Chemical Corporation with each other. A reaction vessel was charged with 20 parts of methyl ethyl ketone (MEK) available from FUJIFILM Wako Pure Chemical Corporation and 0.3 part of a polymerization chain transfer agent (2-mercaptoethanol) available from FUJIFILM Wako Pure Chemical Corporation as well as 10% of the monomer mixed solution prepared above, and then an inside atmosphere of the reaction vessel was fully replaced with nitrogen gas.
On the other hand, a mixed solution prepared by mixing remaining 90% of the monomer mixed solution, 0.27 part of the aforementioned polymerization chain transfer agent, 60 parts of MEK and 2.2 parts of an azo-based radical polymerization initiator "V-65" (2,2'-azobis(2,4-dimethylvaleronitrile)) available from FUJIFILM Wako Pure Chemical Corporation was charged into a dropping funnel. In a nitrogen atmosphere, the aforementioned monomer mixed solution in the reaction vessel was heated to 65°C while stirring, and then the mixed solution in the dropping funnel was added dropwise into the reaction vessel over 3 hours. After the elapse of 2 hours from completion of the dropwise addition while maintaining the resulting mixed solution at 65°C, a solution prepared by dissolving 0.3 part of the aforementioned polymerization initiator in 5 parts of MEK was added to the reaction vessel, and the resulting reaction solution was further aged at 65°C for 2 hours and then at 70°C for 2 hours, thereby obtaining a solution of a carboxy group-containing water-insoluble polymer a (number-average molecular weight of the polymer a: 10500).

Preparation Example 1 (Preparation of Water Dispersion of Black Pigment-Containing Water-Insoluble Polymer Particles A1)

(1) A polymer produced by drying the solution of the water-insoluble polymer a obtained in Production Example 1 under reduced pressure was weighed in an amount of 58.1 parts and mixed with 71.5 parts of MEK, and then 23.6 parts of a 5N sodium hydroxide aqueous solution (content of sodium hydroxide as solid components: 16.9%; for volumetric titration) available from FUJIFILM Wako Pure Chemical Corporation were further added to the resulting mixture to thereby neutralize the polymer such that the ratio of the number of moles of sodium hydroxide to the number of moles of carboxy groups of the polymer was 40 mol% (neutralization degree: 40 mol%). Moreover, 695.1 parts of ion-exchanged water were added to the resulting mixed solution, and 200 g of a black pigment "MONARCH 717" (C.I. Pigment Black 7) available from Cabot Corporation was further added to the mixed solution. The resulting dispersion was stirred at 20°C for 60 minutes using a disper "ULTRA DISPER" (tradename) available from Asada Iron Works Co., Ltd., while operating a disper blade thereof at a rotating speed of 7000 rpm.
The resulting mixture was subjected to dispersion treatment under a pressure of 150 MPa using "Microfluidizer" (tradename) available from Microfluidics Corporation by passing the mixture through the device 9 times.
(2) A 2 L eggplant-shaped flask was charged with 1000 g of the dispersion treatment product obtained in the above (1), and then 666.7 g of ion-exchanged water was added thereto (solid content: 15.0%). The resulting mixture was maintained under a pressure of 0.09 MPa for 3 hours in a warm water bath adjusted to 32°C using a rotary distillation apparatus "Rotary Evaporator N-1000S" available from Tokyo Rikakikai Co., Ltd., operated at a rotating speed of 50 rpm to remove the organic solvent therefrom. Moreover, the temperature of the warm water bath was adjusted to 62°C, and the pressure in the apparatus was reduced to 0.07 MPa, and the reaction solution was concentrated under this condition until a solid content of the obtained reaction solution reached 25.0%.

(3) The thus obtained concentrated solution was charged into a 500 mL-capacity angle rotor, and subjected to centrifugal separation using a high-speed cooling centrifuge "himac CR22G" (temperature set: 20°C) available from Hitachi Koki Co., Ltd., at 7000 rpm for 20 minutes. Thereafter, the liquid layer portion thus separated from the concentrated solution was subjected to filtration treatment through a 5 $\mu$m-mesh membrane filter "Minisart" available from Sartorius Inc.

Four hundred grams of the resulting filtrate (C.I. Pigment Black 7: 76.0 g; the aforementioned water-insoluble polymer a: 22.1 g) were mixed with 61.61 g of ion-exchanged water and then with 1.08 g of "Ploxel LVS" (mildew-proof agent; active ingredient content: 20%) available from Arch Chemicals Japan, Inc., and further mixed with 5.20 g of a crosslinking agent "DENACOL EX-321L" (trimethylolpropane polyglycidyl ether; epoxy equivalent: 129; water solubility rate: 27%) available from Nagase ChemteX Corporation, followed by stirring the resulting mixture at 70°C for 3 hours. The obtained reaction solution was cooled to 25°C, and then subjected to filtration treatment through the aforementioned 5 $\mu$m-mesh filter. Furthermore, the obtained filtered product was mixed with ion-exchanged water so as to adjust a solid content of the resulting mixture to 18%, thereby obtaining a water dispersion of black pigment-containing water-insoluble polymer particles A1.

The average particle size of the pigment-containing water-insoluble polymer particles A1 in the thus obtained water dispersion was 90 nm.

Production Example 2 (Production of Water Dispersion of Pigment-Free Water-Insoluble Polymer Particles B)

A reaction vessel equipped with a dropping funnel was charged with the monomers, "LATEMUL E-118B" (sodium polyoxyethylenealkylethersulfate) as a surfactant available from Kao Corporation, potassium persulfate as a polymerization initiator available from FUJIFILM Wako Pure Chemical Corporation and ion-exchanged water as shown in "Initially Charged Monomer Solution" in Table 1, followed by mixing the contents of the reaction vessel with each other. Then, an inside atmosphere of the reaction vessel was replaced with nitrogen gas, thereby obtaining an initially charged monomer solution. In addition, the monomers, surfactant, polymerization initiator and ion-exchanged water as shown in "Dropping Monomer Solution" in Table 1 were mixed with each other to prepare a dropping monomer solution. The resulting dropping monomer solution was charged into the dropping funnel, and an inside atmosphere of the dropping funnel was replaced with nitrogen gas.

In a nitrogen atmosphere, the initially charged monomer solution in the reaction vessel was heated from room temperature to 80°C over 30 minutes while stirring, and while maintaining the initially charged monomer solution in the reaction vessel at 80°C, the monomers in the dropping funnel were gradually added dropwise to the reaction vessel over 3 hours. After completion of the dropwise addition, while maintaining the inside temperature of the reaction vessel, the contents of the reaction vessel were stirred for 1 hour. Then, the resulting dispersion was filtered through a 200-mesh filter, thereby obtaining a water dispersion of pigment-free water-insoluble polymer particles B (solid content: 44.1%; average particle size: 94 nm).

The weight-average molecular weight and acid value of the polymer b1 constituting the thus obtained pigment-free water-insoluble polymer particles B were 750,000 and 16 mgKOH/g, respectively.

TABLE 1

|  |  | Production Example 2 |
| --- | --- | --- |
| Initially charged monomer solution (part(s)) | Methacrylic acid | 0.5 |
|  | Methyl methacrylate | 8.5 |
|  | 2-Ethylhexyl acrylate | 11 |
|  | "LATEMUL E-118B"[*1] | 11.1 |
|  | Ion-exchanged water | 382.8 |
|  | Potassium persulfate | 0.2 |
| Dropping monomer solution (part(s)) | Methacrylic acid | 9.5 |
|  | Methyl methacrylate | 161.5 |
|  | 2-Ethylhexyl acrylate | 209 |
|  | "LATEMUL E-118B"[*1] | 35.1 |
|  | Ion-exchanged water | 183 |
|  | Potassium persulfate | 0.6 |

(continued)

| | Production Example 2 |
|---|---|
| Weight-average molecular weight of water-insoluble polymer b | 750,000 |
| Note: *1: Emulsifier (sodium polyoxyethylenealkylethersulfate) available from Kao Corporation | |

Example 1 (Production of Water-Based Ink)

The pigment water dispersion A1 of the black pigment-containing water-insoluble polymer particles A1 obtained in Preparation Example 1 (solid content: 18%; pigment: 13%; polymer: 5%) was weighed in an amount of 44.4 g, and mixed with 11.3 g of the pigment-free water-insoluble polymer particles B (solid content: 44.1%) obtained in Production Example 2, 12.0 g of diethylene glycol monobutyl ether available from FUJIFILM Wako Pure Chemical Corporation, 18.0 g of 1,2-butanediol available from FUJIFILM Wako Pure Chemical Corporation, 1.0 g of an acetylene glycol-based surfactant "SURFYNOL 440" (an ethyleneoxide (40%) adduct of "SURFYNOL 104"; average molar number of addition of ethyleneoxide: 3.5) available from Nissin Chemical Co., Ltd., and 0.2 g of a polyether-modified silicone-based surfactant "SILFACE SAG005" (wetting agent; HLB: 7; kinematic viscosity: 170 mm$^2$/s (25°C)) available from Nissin Chemical Co., Ltd., and the resulting mixture was further mixed with ion-exchanged water such that a total amount of the mixture was 100 g.

Examples 2 to 9 and Comparative Examples 1 to 3 (Production of Water-Based Inks)

The same procedure as in Example 1 was repeated except that the composition of the ink obtained in Example 1 was changed to those shown in Table 2, thereby obtaining respective water-based inks. Incidentally, the amounts of the respective components shown in Table 2 are solid contents thereof.
The thus obtained respective inks were evaluated for continuous ejection properties and bending properties by the following methods.

<Evaluation of Ejection Properties and Bending Properties>

(Ink-Jet Printing Method)

Under the environmental conditions of a temperature of 25±1°C and a relative humidity of 30±5%, the respective inks were loaded into a print evaluation apparatus available from Trytech Co., Ltd., equipped with an ink-jet print head "KJ4B-HD06MHG-STDV" (piezoelectric type) available from Kyocera Corporation.
The operating conditions of the print evaluation apparatus were set to an applied head voltage of 26 V, a drive frequency of 20 kHz, an ejected ink droplet amount of 12 pL, a print head temperature of 32°C, a print head resolution of 600 dpi, the number of ink shots for flushing before being ejected of 200 shots and a negative pressure of -4.0 kPa, and an OPP film "FOR-AQ" (one surface of which had been subjected to corona discharge treatment) available from Futamura Chemical Co., Ltd., was fixed on a transportation table under reduced pressure such that the longitudinal direction of the printing medium was aligned with a transportation direction thereof.
The print evaluation apparatus was equipped with the ink-jet print head for ejecting the ink onto the printing medium and an under heater for heating the printing medium from a rear side surface of the printing medium which was opposed to the ink-jet print head. The distance between the under heater and the printing medium, the distance between the ink-jet print head and the printing medium and the temperature of the surface of the under heater were adjusted to 0.25 mm, 1.0 mm and 55°C (the temperature of the printing medium was adjusted to 50°C), respectively.
An A4-size film heater available from Kawai Corporation was fixedly mounted to the transportation table for the printing medium so as to heat the printing medium. The temperature of the film heater was controlled to 40°C, and the transportation speed of the printing medium was controlled to 25 m/min.
A printing command was transmitted to the aforementioned print evaluation apparatus to print a Duty 100% image thereon. Thereafter, the thus printed image was dried by a hot air dryer at 60°C for 5 seconds, thereby obtaining a printed material.

(Continuous Ejection Properties)

A 20 cm-width Duty 100% (400% in total) image was continuously printed on 500 sheets (corresponding to a length of 100 m as a printed portion) of an OPP film "FOR-AQ" (one surface of which had been subjected to corona discharge treatment) available from Futamura Chemical Co., Ltd. Thereafter, a print check pattern capable of judging ejection or non-ejection of the ink from all of nozzles (2656 nozzles) was printed on a paper, and the number of missing nozzles (corresponding to the number of clogged nozzles from which the ink could not be normally ejected) was counted to evaluate continuous ejection properties of the ink according to the following evaluation ratings.

(Evaluation Ratings)

5: No missing nozzles were present;
4: Number of missing nozzles was from 1 to 2;
3: Number of missing nozzles was from 3 to 8;
2: Number of missing nozzles was from 9 to 14; and
1: Number of missing nozzles was not less than 15.

The less the number of the missing nozzles became, the more excellent the continuous ejection properties of the ink was. If the evaluation rating was 5, 4 or 3, the ink could be used in the practical applications.

(Bending Properties)

A 20 cm-width Duty 100% (400% in total) image was printed on a PET film "FE2001" (one surface of which had been subjected to corona discharge treatment) available from Futamura Chemical Co., Ltd., and an OPP film "FOR-AQ" (one surface of which had been subjected to corona discharge treatment) available from Futamura Chemical Co., Ltd.
The resulting respective printed materials were grasped at opposite ends thereof in both hands, and crumpled with the hands 50 times. Then, the condition of peeling of the printed surface was visually observed to measure a peeled area of the printed surface on each of the PET film and the OPP film and thereby evaluate bending properties thereof according to the following evaluation ratings.

(Evaluation Ratings)

5: Peeled area of the printed surface was not more than 5%;
4: Peeled area of the printed surface was from 6 to 10%;
3: Peeled area of the printed surface was from 11 to 20%;
2: Peeled area of the printed surface was from 21 to 30%;
1: Peeled area of the printed surface was not less than 31%.

The smaller the peeled area of the printed surface became, the more excellent the bending properties of the printed material was. If the evaluation rating was 5, 4 or 3, the printed material could be used in the practical applications.

TABLE 2

| | | | Examples | | | | | | | | | Comparative Examples | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Water dispersion of pigment-containing water-insoluble polymer particles A1 | | | 8.0 | 8.0 | 8.0 | 8.0 | 8.0 | 8.0 | 8.0 | 8.0 | 8.0 | 8.0 | 8.0 | 8.0 |
| Water dispersion of pigment-free water-insoluble polymer particles B | | | 5.0 | 5.0 | 5.0 | 5.0 | 5.0 | 5.0 | 5.0 | 5.0 | 5.0 | 5.0 | 5.0 | 5.0 |
| Alkanediol | 1,2-Butanediol | bp: 192°C | 18.0 | | 18.0 | | 18.0 | | 18.0 | 20.0 | | | 17.0 | 15.0 |
| | 1,3-Propanediol | bp: 210°C | | 18.0 | | 18.0 | | 18.0 | | | 18.0 | 18.0 | | |
| Glycol ether | Diethylene glycol monoisopropyl ether | bp: 207°C | | | | | | | | 12.0 | | 12.0 | 13.0 | 15.0 |
| | Diethylene glycol monobutyl ether | bp: 231°C | 12.0 | 12.0 | | | | | | | 10.0 | | | |
| | Diethylene glycol monoisobutyl ether | bp: 230°C | | | 12.0 | 12.0 | | | | | | | | |
| | Triethylene glycol monobutyl ether | bp: 274°C | | | | | 12.0 | 12.0 | | | 10.0 | | | |
| Other organic solvent | Triethylene glycol | bp: 287°C | | | | | | | | | 2.0 | | | |
| Surfactant | Acetylene glycol-based surfactant | | 1.0 | 1.0 | 1.0 | 1.0 | 1.0 | 1.0 | 1.0 | 1.0 | 1.0 | 1.0 | 1.0 | 1.0 |
| | Silicone-based surfactant | | 0.2 | 0.2 | 0.2 | 0.2 | 0.2 | 0.2 | 0.2 | 0.2 | 0.2 | 0.2 | 0.2 | 0.2 |
| Mass ratio (alkanediol/organic solvents except for alkanediol) | | | 1.5 | 1.5 | 1.5 | 1.5 | 1.5 | 1.5 | 1.5 | 2.0 | 1.5 | 1.5 | 1.3 | 1.0 |
| Mass ratio (alkanediol/glycol ether) | | | 1.5 | 1.5 | 1.5 | 1.5 | 1.5 | 1.5 | 1.5 | 2.0 | 1.8 | 1.5 | 1.31 | 1.0 |
| Evaluation results | Continuous ejection properties | | 3 | 4 | 3 | 4 | 4 | 5 | 3 | 4 | 4 | 3 | 2 | 1 |
| | Bending properties (against PET film) | | 4 | 4 | 4 | 3 | 5 | 5 | 4 | 5 | 4 | 1 | 3 | 2 |
| | Bending properties (against OPP film) | | 4 | 3 | 4 | 3 | 5 | 4 | 3 | 3 | 3 | 1 | 2 | 1 |

EP 3 904 473 A1

From the results shown in Table 2, it was confirmed that the inks obtained in the Examples were excellent in ejection properties as well as bending properties (follow-up properties) against deformation of a low-liquid absorbing printing medium, as compared to the inks obtained in the Comparative Examples.

Industrial Applicability

The water-based ink for ink-jet printing according to the present invention is excellent in ejection properties as well as bending properties (follow-up properties) against deformation of a low-liquid absorbing printing medium, and therefore can be suitably used in printing for soft packaging, in particular, such as food packaging, etc.

**Claims**

1. A water-based ink for ink-jet printing on a low-liquid absorbing printing medium, comprising a pigment, a polymer dispersant, a water-soluble organic solvent and water, in which:

   the water-soluble organic solvent comprises an alkanediol having not less than 3 and not more than 4 carbon atoms and a glycol ether having a boiling point higher than a boiling point of the alkanediol;
   the glycol ether comprises an alkyl group having not less than 3 and not more than 4 carbon atoms and a diethylene glycol or triethylene glycol group; and
   a mass ratio of the alkanediol to the water-soluble organic solvent except for the alkanediol (alkanediol/water-soluble organic solvent except for alkanediol) is not less than 1.4.

2. The water-based ink for ink-jet printing according to claim 1, wherein the alkanediol is at least one compound selected from the group consisting of 1,2-propanediol, 1,3-propanediol and 1,2-butanediol.

3. The water-based ink for ink-jet printing according to claim 1 or 2, wherein the glycol ether is at least one compound selected from the group consisting of diethylene glycol monoisopropyl ether, diethylene glycol monobutyl ether, diethylene glycol monoisobutyl ether and triethylene glycol monobutyl ether.

4. The water-based ink for ink-jet printing according to any one of claims 1 to 3, wherein the pigment is in the form of pigment-containing polymer particles.

5. The water-based ink for ink-jet printing according to claim 4, wherein the pigment-containing polymer particles are in the form of polymer particles crosslinked with a crosslinking agent.

6. The water-based ink for ink-jet printing according to any one of claims 1 to 5, further comprising at least one surfactant selected from the group consisting of an acetylene glycol-based surfactant and a silicone-based surfactant.

7. The water-based ink for ink-jet printing according to any one of claims 1 to 6, wherein the low-liquid absorbing printing medium is formed of polyethylene terephthalate or polypropylene.

8. The water-based ink for ink-jet printing according to any one of claims 1 to 7, for use in printing for soft packaging.

9. An ink-jet printing method comprising the step of printing characters or images on a low-liquid absorbing printing medium using the water-based ink according to any one of claims 1 to 8.

10. The ink-jet printing method according to claim 9, wherein a printed surface of the low-liquid absorbing printing medium is heated at a temperature of not higher than 70°C.

11. A use of the water-based ink for ink-jet printing according to any one of claims 1 to 7 in printing for soft packaging.

**INTERNATIONAL SEARCH REPORT**

| International application No. |
| --- |
| PCT/JP2019/047922 |

**A. CLASSIFICATION OF SUBJECT MATTER**
C09D 11/322(2014.01)i; B41M 5/00(2006.01)i
FI: C09D11/322; B41M5/00 120; B41M5/00 112; B41M5/00 100

According to International Patent Classification (IPC) or to both national classification and IPC

**B. FIELDS SEARCHED**

Minimum documentation searched (classification system followed by classification symbols)
C09D11/322; B41M5/00

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2018-115325 A (TOYO INK SC HOLDINGS CO., LTD.) 26.07.2018 (2018-07-26) claims, paragraphs [0001], [0105], example 33 | 1-4,6-11<br>5-11 |
| X<br>Y | JP 2017-71662 A (TOYO INK SC HOLDINGS CO., LTD.) 13.04.2017 (2017-04-13) claims, paragraphs [0030], [0143], [0154], [0170], (ink 6), examples 4, 11, 18, 25, 32, 43, 54, 61, 68, 75 | 1-4,6-11<br>5-11 |
| X<br>Y | JP 2017-61608 A (TOYO INK SC HOLDINGS CO., LTD.) 30.03.2017 (2017-03-30) claims, paragraphs [0018], [0061], examples 25, 27 | 1-4,6-11<br>5-11 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 February 2020 (20.02.2020) | 10 March 2020 (10.03.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2019/047922

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2012-184334 A (TOYO INK SC HOLDINGS CO., LTD.) 27.09.2012 (2012-09-27) claims, paragraph [0029], examples 1-4, 7-9 | 1-4,6-11<br>5-11 |
| X<br>Y | JP 2014-198824 A (RICOH CO., LTD.) 22.10.2014 (2014-10-22) claims, paragraphs [0007], [0046], example 7 | 1-4,6-11<br>5-11 |
| X<br>Y | JP 6375019 B1 (TOYO INK SC HOLDINGS CO., LTD.) 15.08.2018 (2018-08-15) claims, paragraph [0022], examples 1-66, 68 | 1-4,6-11<br>5-11 |
| X<br>Y | JP 6388245 B1 (TOYO INK SC HOLDINGS CO., LTD.) 12.09.2018 (2018-09-12) claims, paragraph [0022], examples 1-66, 68 | 1-4,6-11<br>5-11 |
| X<br>Y | JP 2013-199634 A (KYOCERA DOCUMENT SOLUTIONS INC.) 03.10.2013 (2013-10-03) clams, examples 1-19, 24, 25 | 1-4,6-11<br>5-11 |
| Y | JP 2017-82189 A (KAO CORP.)18.05.2017 (2017-05-18) claims, paragraphs [0009], [0071] | 5-11 |
| Y | JP 2016-210959 A (KAO CORP.) 15.12.2016 (2016-12-15) claims, paragraphs [0009], [0072], examples 1-21 | 5-11 |
| Y | JP 2018-108651 A (KAO CORP.)12.07.2018 (2018-07-12) claims, paragraphs [0007]-[0010], [0068], examples 1-12 | 5-11 |

Form PCT/ISA/210 (continuation of second sheet) (January 2015)

INTERNATIONAL SEARCH REPORT

Information on patent family members

| International application No. |
| --- |
| PCT/JP2019/047922 |

| Patent Documents referred in the Report | Publication Date | Patent Family | Publication Date |
| --- | --- | --- | --- |
| JP 2018-115325 A | 26 Jul. 2018 | (Family: none) | |
| JP 2017-71662 A | 13 Apr. 2017 | (Family: none) | |
| JP 2017-61608 A | 30 Mar. 2017 | (Family: none) | |
| JP 2012-184334 A | 27 Sep. 2012 | (Family: none) | |
| JP 2014-198824 A | 22 Oct. 2014 | US 2015/0361282 A1 claims, paragraphs [0025], [0116], example 7 EP 2951247 A1 CN 104968735 A | |
| JP 6375019 B1 | 15 Aug. 2018 | (Family: none) | |
| JP 6388245 B1 | 12 Sep. 2018 | (Family: none) | |
| JP 2013-199634 A | 03 Oct. 2013 | US 2013/0215175 A1 claims, examples 1-19, 24, 25 | |
| JP 2017-82189 A | 18 May 2017 | (Family: none) | |
| JP 2016-210959 A | 15 Dec. 2016 | US 2018/0142110 A1 claims, paragraphs [0135], [0228], [0229], examples 1-21 EP 3275949 A1 CN 107532025 A | |
| JP 2018-108651 A | 12 Jul. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015028133 A

- JP 2018080255 A